# EUROPÄISCHE PATENTSCHRIFT

(11) **EP 0 464 343 B1**
(45) Veröffentlichungstag und Bekanntmachung des Hinweises auf die Patenterteilung: **05.10.1994**
(21) Anmeldenummer: 91107747.7
(22) Anmeldetag: 14.05.1991
(51) Int. Cl.: A01K 5/02

(54) **Futterspendeautomat zur Tierfütterung**
Feeding apparatus for animals
Installation d'alimentation d'animaux

(30) Priorität: 05.07.1990 DE 9010190 U
(43) Veröffentlichungstag der Anmeldung: 08.01.1992
(73) Patentinhaber: ERICH OSTERMEIER STALLEINRICHTUNG GmbH, 84076 Pfeffenhausen (DE)
(72) Erfinder: Ostermeier, Erich sen., W-8308 Oberhornbach 19 (DE); Ostermeier, Erich jun., W-8308 Oberhornbach 19 (DE)
(74) Vertreter: Riederer Freiherr von Paar zu Schönau, Anton

(56) Entgegenhaltungen:
- EP-A- 0 206 636
- WO-A-89/08388
- GB-A- 2 042 865
- NL-A- 8 802 192
- NL-C- 82 204

## Beschreibung

Die Erfindung bezieht sich auf einen Futterspendeautomat nach dem Oberbegriff des Anspruchs 1, insbesondere für die Schweinemast.

Es sind Futterspendeautomaten bekannt (z. B. GB-A 2 042 865), bei denen ein prismenförmiger Einfüll- und Speichertrichter unmittelbar in eine Freßmulde mündet. Zur Beeinflussung der Nachfließgeschwindigkeit des Futters in die Freßmulde weist der Trichter eine verstellbare Trichterwand auf, die in ihrer Ebene verschiebbar ist, wodurch ein die untere Trichteröffnung darstellender Spalt breiter oder schmäler gemacht werden kann. Es hat sich erwiesen, daß bei derartigen Futterautomaten relativ viel Futter verloren geht, da die Tiere, insbesondere Schweine, beim stets aus dem Vollen erfolgenden Fressen sehr viel Futter hinauswerfen und auf dem Boden verteilen, wo es im allgemeinen für den Nutzzweck verloren ist.

Gemäß einer neueren bekannten Konstruktion (WO-A-89/08388) mündet der Trichter im Futterautomat über einem Zwischentisch, dessen Anstand vom Spalt des Trichters durch Aufwärts- oder Abwärtsbewegung des Zwischentischs verändert werden kann. Der Zwischentisch wirkt sich so aus, daß sich ein kleiner Futterberg am Zwischentisch anhäuft und schließlich den Spalt verschließt, so daß auf dem Zwischentisch nur eine beschränkte Menge Futter zwischengelagert wird. Von dort wird das Futter von den Tieren in die Freßmulde hinuntergewischt, woraufhin oben wieder eine entsprechende Menge nachläuft. Die Freßmulde ist stets sauber ausgefressen, während auf dem Zwischentisch eine kleine, trockene, vom Schüttwinkel des Futters abhängige Menge bereitsteht. Zur Anpassung an unterschiedliche Futterstrukturen, beispielsweise wenn feuchtes Futter im Trichter zum Zusammenklumpen neigt, kann die Spaltbreite durch Verstellen eines am unteren Ende des Trichters angeordneten Schiebers verstellt werden. Der bekannte Futterspendeautomat ist ebenfalls ein Breiautomat mit einem Wasseranschluß etwa in der Mitte der Freßmulde und mit einem mit diesem Anschluß verbundenen Tank, der sich hinter dem Trichter befindet.

Der beschriebene Stand der Technik betrifft Futterspendeautomaten für nur einen Freßplatz. Es sind auch Futterspendeautomaten bekannt, die mehrere nebeneinanderliegende Freßplätze umfassen. Die an sich bekannte Nachlaufregulierung würde jedoch für die einzelnen Futterplätze des Mehrstellen-Futterspendeautomaten eine erhebliche konstruktive Komplexität mit sich bringen.

Demgegenüber soll durch die Erfindung ein Futterspendeautomat geschaffen werden, der, ausgehend von dem bekannten Futterspendeautomat gemäß dem Oberbegriff des Anspruchs 1 (WO-A-89/08388), ohne großen Aufwand an die Erfordernisse eines Mehrstellen-Futterautomaten angepaßt werden kann. Dies wird durch die im Anspruch 1 gekennzeichnete Erfindung erreicht. Die Kombination des Zwischentischs mit einem Trichter mit veränderlichem Spalt, durch die einerseits die Schüttportion auf dem Zwischentisch so dimensioniert werden kann, daß kein Futter verloren geht, und andererseits die Spaltbreite so gewählt werden kann, daß auch Futterklumpen oder sonstwie miteinander verklebte Partien noch ohne weiteres austreten können, ist durch die Erfindung auch bei einem Mehrstellen-Futterautomaten anwendbar, da es sich erwiesen hat, daß eine Einzel-Steuerung der Freßplätze nicht erforderlich ist, da aufgrund des Verhaltens der Tiere eine möglicherweise ursprünglich ungleichmäßige Annahme der verschiedenen Freßplätze sich dadurch ausgleicht, daß das erhöhte Futterangebot an einem zunächst vernachlässigten Freßplatz an diesem sehr schnell ein Tier angelockt. Auch ein Wassereinlaufanschluß soll gemäß Anspruch 5 nur seitlich vorhanden sein, er erweist sich als ausreichende Wasserquelle für die Breibildung selbst bei relativ breiten Futterspendeautomaten. Die Anbringung an den Seitenwänden ist einer Anbringung an der Rückwand deshalb vorzuziehen, weil der Futterspendeautomat bevorzugt an einer Wand befestigt wird und deshalb hinten keine Installationsteile aufweisen sollte.

Da davon auszugehen ist, daß die Futterstruktur über die gesamte Breite des Automaten die gleiche ist, ist die gleiche Einstellung des Einfülltrichters über die gesamte Breite des Automaten nicht mit der Folge verbunden, daß einzelne Freßplätze verstopfen würden und ausfielen, während andere weiterhin beliefert werden.

Vorzugsweise erfolgt die Wand- oder Plattenverstellung zum Zweck der Spaltveränderung für alle Freßstellen über ein Schraubgewinde, mit der Folge, daß die Verstellung leicht mit großer Genauigkeit ausgeführt werden kann und aufgrund der Kraftübersetzung auch keine Schwierigkeiten aufgrund des Gewichts der doch recht breiten Platte auftreten, außerdem auch nicht, wenn sich im Spalt, in den Führungsschienen oder sonstwo am Weg der verschieblichen Wand oder Platte Verschmutzungen und Hindernisse befinden. Eine besonders vielseitige Steuermöglichkeit ergibt sich, wenn zusätzlich zur Spaltbreiteneinstellung auch noch eine an sich bekannte Zwischentisch-Höhenverstellung möglich ist. Auch ist das Vorsehen von z.B. zwei verstellbaren Wänden und/oder Platten, die den Spalt über dessen ganzer Breite begrenzen, möglich.

Weitere Einzelheiten, Vorteile und Weiterbildungen der Erfindung ergeben sich aus der folgenden Beschreibung bevorzugter Ausführungsbeispiele unter Bezugnahme auf die Zeichnung. Es zeigen:

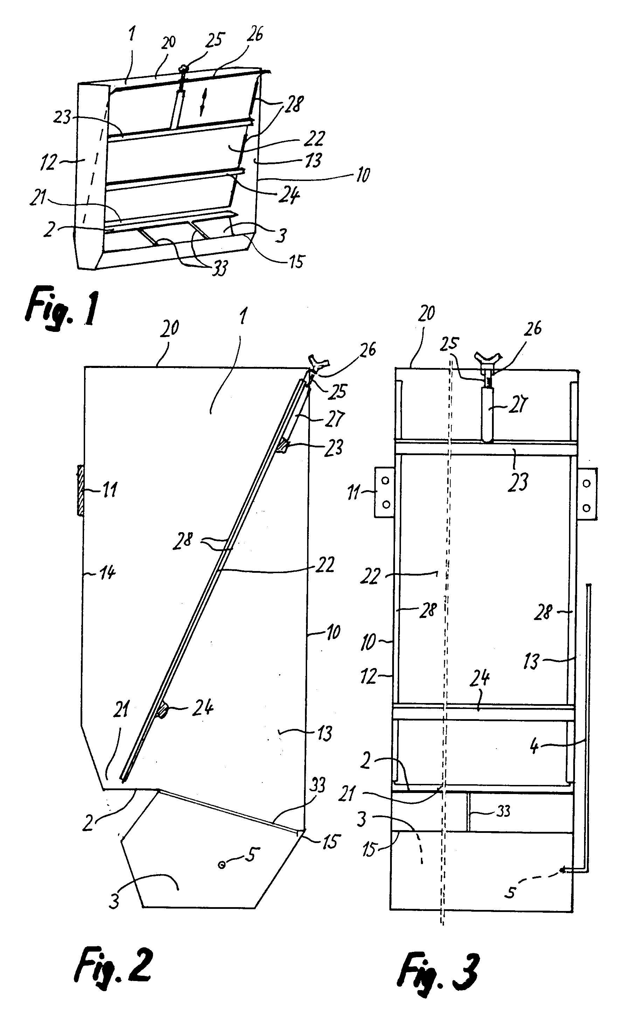

- Fig. 1: eine perspektivische Darstellung eines erfindungsgemäßen Futterspendeautomaten mit mehreren Freßstellen;
- Fig. 2: einen Vertikalschnitt in Seitenansicht des Futterspendeautomaten von Fig. 1;
- Fig. 3: den Automaten nach Fig. 1 in zusammengezogener Vorderansicht.

Ein Futterspendeautomat mit mehreren, nämlich im dargestellten Beispiel drei Freßstellen für Schweine weist einen Einfülltrichter (1), einen Zwischentisch (2) und eine rinnenförmige Reihe von Freßmulden (3) auf. In die Freßmulden (3) gerät Futter, das aus dem Einfülltrichter (1) auf den Zwischentisch (2) ausgeflossen ist und von diesem von den Schweinen in die Freßmulde hinuntergewischt worden ist. In eine der Freßmulden (3) mündet außerdem ein Wasserrohr (4) über ein automatisches Wasserventil (5) (Fig. 3), das von den Schweinen durch Berührung geöffnet wird. Das Wasser vermischt sich mit dem durch den Trichter zugeführten festen Futter zu einem Brei, so daß von dem Futterspendeautomaten auch als Breiautomat gesprochen werden kann.

Der Futterspendeautomat hat insgesamt eine Gehäuse (10), in dem sich der Einfülltrichter, der Zwischentisch und die Reihe der Freßmulden befinden. Das Gehäuse (10) ist im wesentlichen quaderförmig, wird jedoch in seinem Fußbereich etwas schmaler, um in den Freßmulden (3) im Bodenbereich eine gewisse Konzentration des Futters und damit eine Erleichterung des vollständigen Ausfressens durch die Schweine zu erreichen. An der Rückwand weist das Gehäuse (10) Befestigungslaschen (11) zum Anschrauben an der Wand auf. Das Gehäuse (10) besteht im wesentlichen aus zwei Seitenwänden (12) und (13) und einer Rückwand (14), während die der Rückwand gegenüberliegende Vorderseite mit Ausnahme eines vorderen Rands (15) der Freßmulden (3) offen ist. Der sich über die gesamte Gehäusebreite erstreckende Zwischentisch (2) ist bei dieser Ausführung durch eine Einbuchtung oder Stufe im Gehäuse (10) gebildet, die zwischen den beiden Seitenwänden (12) und (13) verläuft und eine horizontale Oberseite hat. Die Einbuchtung befindet sich in der Rückwand (14) in deren bereits zur Formung der Mulde schrägem unterem Teil. Diese Konstruktion verhindert die Bildung einer Schmutzecke zwischen der Tisch-Unterseite und der Rückwand und erleichtert somit die Reinigung der Freßmulden (3).

Der sich über die gesamte Gehäusebreite erstreckende Einfülltrichter (1) ist prismenförmig mit einer Befüllungsöffnung (20) in Form einer offenen Oberseite und mit einer unteren Abgabeöffnung in Form eines gleichmäßig über alle Freßmulden (3) verlaufenden Spalts (21), der in geringem Abstand über dem Zwischentisch (2) mit seiner Längsrichtung parallel zur Rückwand (14) verläuft. Der Einfülltrichter (1) wird an seiner Rückseite begrenzt von der Gehäuse-Rückwand (14) und an seinen Seiten von Teilen der Seitenwände (12) und (13), während seine schräge Vorderseite von einer verschieblichen Trichterwand (22) begrenzt ist. Diese verschiebliche Trichterwand ist eine ebene Platte, dies ist jedoch nicht funktionsnotwendig, es kämen auch Profilplatten oder sonstige Strukturen, jedoch vorzugsweise mit einer linearen Unterkante in Frage. Die Verschieblichkeit der Trichterwand (22) dient deren Verstellbarkeit in der Ebene ihrer Flächenausdehnung unter Veränderung der Breite des Spalts (21) sowie unter Veränderung des Abstands des Spalts (21) vom Zwischentisch (2). Die Trichterwand (22) ist auf einer oberen Traverse (23) und einer unteren Traverse (24) abgestützt, die sich zwischen den Seitenwänden (12) und (13) erstrecken. Mit der oberen Traverse (23) ist eine Verstellschraube (25) verbunden, die an ihrem oberen Ende drehbar, jedoch in ihrer Axialrichtung unverschiebbar mit einer seitlich abstehenden Lasche (26) der Trichterwand (22) verbunden ist. Die Verstellschraube (25) ist zu ihrer Verbindung mit der oberen Traverse (23) in eine langgestreckte Schraubhülse (27) eingeschraubt, gegen die bei ihrer Verdrehung die Schraube (25) nach oben oder unten verstellt wird und damit die verstellbare Trichterwand (22) mitnimmt, die entlang ihren beiden Seitenkanten in Führungsschienen (28) geführt ist, die an den Seitenwänden (12) und (13) befestigt sind. Durch Drehen an der Verstellschraube (25) läßt sich die Trichterwand (22) also in ihrer Höhenlage justieren, wodurch der Spalt (21) zwischen ihrem unteren Ende und der in diesem Teil schrägen Rückwand (14) gleichzeitig in seiner Weite und in seinem Abstand zum Zwischentisch (2) verändert wird. Die Freßmulden (3) sind als zusammenhängende gleichmäßige Rinne ausgebildet, sie sind jedoch durch Stäbe (33), die vom Zwischentisch (2) zum vorderen Rand (15) der Freßmulden (3) verlaufen, so unterteilt, daß die Schweine gegenseitig getrennt sind.

Durch die dargestellte und sehr einfache Konstruktion läßt sich somit eine optimale Einstellung zur Erzielung einer vollständigen Verwertung des Futters durchführen. Erfahrungsgemäß räumt das Schwein seine Freßmulde vollständig aus, während am Futtertisch verbleibendes trockenes Futter dort, ohne Schaden zu nehmen, auch längere Zeit bis zur nächsten Inanspruchnahme des Automaten liegen kann. Die gemeinsame Steuerung der Nachfüllmenge des trockenen Futters und die Wasserzuführung an nicht allen, sondern nur den an die Seitenwände oder eine der Seitenwände anschließende(n) Freßmulde(n) hat sich als völlig ausreichend und bedarfsgerecht erwiesen, die Schweine selbst lassen durch ihr Freßverhalten keine Ungleichmäßigkeit bei der Versorgung der Freßplätze aufkommen.

Beim dargestellten Beispiel besteht der Futterautomat aus Edelstahl V2A, mit dem Gehäuse (10) aus 2 mm-Blech, während die verstellbare Trichterwand (22) aus 1,25 mm-Blech besteht. Das Wasserrohr (4) ist aus Kunststoff, bei der Verstellschraube (25) handelt es sich um eine M10-Normschraube. Der Automat ist 1 m hoch, hat eine Freßmuldenbreite von 34 cm und eine Gehäusetiefe von 41,5 cm. Die Tiefenausdehnung des Zwischentischs (2) beträgt 10 m.

## Patentansprüche

1. Futterspendeautomat zur Tierfütterung, mit einem prismenförmigen, aus Trichterwänden gebildeten Einfülltrichter (1) mit rechteckigen Querschnitten, deren Rechteckbreite sich von oben nach unten verringert, und mit senkrechter Durchflußrichtung, der als untere Futteraustrittsöffnung einen Spalt (21) aufweist, unter dem sich ein Zwischentisch (2) befindet, unter welchem sich eine den Überlauf vom Zwischentisch aufnehmende Freßmulde (3) befindet, dadurch gekennzeichnet, daß er ein Mehrstellen-Futterspendeautomat mit durch Stäbe (33) voneinander abgeteilten Freßstellen, die jeweils eine der Freßmulden (3) umfassen, ist und daß eine der Trichterwände (22) entlang allen Freßmulden (3) verläuft und relativ zu den restlichen Trichterwänden (12-14) unter Änderung der Spaltbreite für alle Freßstellen gemeinsam verstellbar, nämlich entlang parallelen Linien (28) geführt und in der durch diese Linien gegebenen Ebene auf- und abverschiebbar ist.

2. Futterspendeautomat nach Anspruch 1, dadurch gekennzeichnet, daß die Linien entlang schräg aufwärts verlaufenden Kanten des prismenförmigen Einfülltrichters verlaufen und entlang diesen Linien Führungsschienen (28) verlegt sind, in denen die als ebene Platte gestaltete verstellbare Trichterwand (22) verschiebbar ist.

3. Futterspendeautomat nach Anspruch 1 oder 2, dadurch gekennzeichnet, daß die verstellbare Trichterwand (22) und Bauteile (23), die starr mit den unverschieblichen Trichterwänden (12, 13, 14) verbunden sind, miteinander über einerseits eine Schraube (25) und andererseits eine Mutter (27) verbunden sind, wobei die Schraube oder die Mutter verdrehbar sind und die Schraube (25) und die Mutter (27) miteinander mit entlang der Verschiebungsrichtung der verstellbaren Trichterwand (22) verlaufender Schraubrichtung verbunden sind.

4. Futterspendeautomat nach einem der Ansprüche 1 bis 3, dadurch gekennzeichnet, daß die die einzelnen Freßmulden (3) gegeneinander abteilenden Stäbe (33) vom Zwischentisch (2) zum vorderen Rand (15) der rinnenförmigen Reihe von Freßmulden verlaufen.

5. Futterspendeautomat nach einem der Ansprüche 1 bis 4, dadurch gekennzeichnet, daß die Reihe der Freßmulden (3) einen seitlichen Wassereinlaufanschluß (4, 5) mit Berührungsbetätigung hat.

6. Futterspendeautomat nach einem der Ansprüche 1 bis 5, dadurch gekennzeichnet, daß der Zwischentisch (2) relativ zum Einfülltrichter (1) in seiner Höhe verstellbar ist.

7. Futterspendeautomat nach einem der Ansprüche 1 bis 6, dadurch gekennzeichnet, daß der Zwischentisch (2) durch eine stufenartige Einbuchtung in der Gehäusewand gebildet ist.

## Claims

1. A feed dispensing apparatus for feeding animals, the apparatus having a prism-shaped fill-in hopper (1) formed of hopper walls and having rectangular transversal sections, the rectangle breadth of which getting smaller from top to bottom, and having a vertical pass-through direction, the hopper further having a gap (21) which is the bottom feed exit opening and under which an interim table (2) is arranged, under which table a feeding trough (3) exists which receives the overflow from the interim table, characterized in that the apparatus is a multi-place feed dispensing apparatus having a plurality of feeding places which are separated from each other by rods (33), each of the places comprising one feeding trough (3), and that one of the hopper walls (22) extends along all of the feeding troughs (3) and is adjustable with relation to the other hopper walls (12-14), thereby changing the gap breadth in common for all feeding places, namely being guided along parallel lines (28) and being shiftable upwards and downwards in the plane defined by these lines.

2. The feed dispensing apparatus according to claim 1, characterized in that the lines extend along edges of the prism-shaped fill-in hopper, extending obligly upwards, and that along these lines guiding tracks (28) are fixed wherein the hopper wall (22) which is shaped as a plane plate is shiftable.

3. The feed dispensing apparatus according to claims 1 or 2, characterized in that the adjustable hopper wall (22) and constructional parts (23) which are rigidly connected with the non-shiftable hopper walls (12, 13, 14) are connected with each other via, on one hand, a screw (25) and, on the other hand, a nut (27), the screw or the nut being rotatable and the screw (25) and the nut (27) being connected with each other with a screwing direction along the shift direction of the adjustable hopper wall (22).

4. The feed dispensing apparatus according to any of claims 1 to 3, characterized in that the rods (33) separating the single feed troughs (3) from each other extend from the interim table (2) to the front margin (15) of the channel-like series of feed troughs.

5. The feed dispensing apparatus according to any of claims 1 to 4, characterized in that the series of feed troughs (3) has a lateral water inlet connection (4, 5) comprising a touch contact actuator.

6. The feed dispensing apparatus according to any of claims 1 to 5, characterized in that the height of the interim table (2) is ajustable with relation to the fill-in hopper (1).

7. The feed dispensing apparatus according to any of claims 1 to 6, characterized in that the interim table (2) is formed by a step-like indentation in the wall of the housing.

## Revendications

1. Trémie automatique de fourrage destinée à l'alimentation animale, comprenant une trémie d'alimentation (1) ayant la forme d'un prisme de section rectangulaire de largeur décroissant de haut en bas, dans laquelle la nourriture descend verticalement en direction d'une ouverture de sortie constituée par une fente (21) sous laquelle se trouve une table intermédiaire (2) surmontant elle-même une auge d'alimentation (3) recueillant le déversement de la table intermédiaire, caractérisée en ce que cette trémie est équipée de plusieurs postes d'alimentation séparés par des barres (33) délimitant les auges d'alimentation (3), une paroi (22) de la trémie bordant l'ensemble des auges (3) et pouvant se déplacer par rapport aux autres parois (12, 13, 14) de la trémie en modifiant la largeur de la fente de tous les postes d'alimentation, par coulissement le long de deux lignes parallèles (28), en montant ou en descendant dans le plan de ces lignes.

2. Trémie automatique selon la revendication 1, caractérisée en ce que les lignes suivent les bords obliques et montant vers l'avant de la trémie d'alimentation en forme de prisme, la paroi mobile (22) de la trémie, constituée d'une plaque plane, coulissant dans des rails de guidage (28) placés le long de ces lignes.

3. Trémie automatique selon la revendication 1 ou 2, caractérisée en ce que la paroi mobile (22) de la trémie et les éléments (23) reliés rigidement aux parois fixes (12, 13, 14) de la trémie sont reliés entre eux par une vis (25) d'une part et un écrou (27) d'autre part, la vis ou l'écrou pouvant tourner et étant reliés entre eux selon une direction de vissage correspondant à celle du coulissement de la paroi mobile (22).

4. Trémie automatique selon l'une des revendications 1 à 3, caractérisée en ce que les barres (33) séparant l'une de l'autre les différentes auges d'alimentation (3) vont de la table intermédiaire (2) au bord antérieur (15) de la série des auges formant une rigole .

5. Trémie automatique selon l'une des revendications 1 à 4, caractérisée en ce que la série des auges d'alimentation (3) est équipée d'un raccord latéral d'amenée d'eau (4, 5) à ouverture par contact.

6. Trémie automatique selon l'une des revendications 1 à 5, caractérisée en ce que la table intermédiaire (2) est réglable en hauteur par rapport à la trémie de remplissage (1).

7. Trémie automatique selon l'une des revendications 1 à 6, caractérisée en ce que la table intermédiaire (2) est constituée par un enfoncement en forme de gradin pratiqué dans la paroi du boîtier.
